# EUROPÄISCHE PATENTSCHRIFT

(11) **EP 0 774 208 B1**
(45) Veröffentlichungstag und Bekanntmachung des Hinweises auf die Patenterteilung: **02.01.2003**
(21) Anmeldenummer: 96117555.1
(22) Anmeldetag: 02.11.1996
(51) Int. Cl.: A22C 17/04, B30B 9/24

(54) **Trennmaschine**
Separating apparatus
Appareil séparateur

(30) Priorität: 18.11.1995 DE 29518810 U
(43) Veröffentlichungstag der Anmeldung: 21.05.1997
(73) Patentinhaber: NORDISCHER MASCHINENBAU RUD. BAADER GMBH + CO KG, 23560 Lübeck (DE)
(72) Erfinder: Rose, Wolfgang, 23617 Eckhorst (DE); Ziebell, Klaus, 23554 Lübeck (DE)
(74) Vertreter: Patentanwälte Wenzel & Kalkoff

(56) Entgegenhaltungen:
- EP-A- 0 394 625
- DE-A- 4 202 603
- DE-A- 4 212 927
- DE-A- 4 328 627
- DE-C- 3 934 087
- US-A- 3 734 000
- US-A- 4 899 890

## Beschreibung

Die Erfindung betrifft eine Maschine zum Trennen von unterschiedlich fließfähigen Bestandteilen eines Stoffgemisches, mit einem Maschinengehäuse, ggf. umfassend ein Ständerteil, das rückseitig mittels einer Rückwand, bodenseitig mittels eines Bodenteils und nach oben mittels eines Deckels abdeckbar ist, und ein Anbauteil, das lösbar an dem Ständerteil unter Belassen eines einen Funktionsraum bildenden Zwischenraumes befestigbar ist; einer in dem Maschinengehäuse angeordneten drehbaren Lochtrommel mit perforiertem Trommelmantel; einem endlosen, den Trommelmantel teilweise umschlingenden und gleichsinnig mit diesem bewegten Preßband; verstellbaren Andrückmitteln wie mindestens einer Walze zum Andrücken des Preßbandes gegen die Lochtrommel; als Kettentrieb ausgebildeten Antriebsmitteln für Lochtrommel und/oder Preßband; und je einer von Preßband und Trommelmantel gebildeten Einzugszone bzw. Abgabezone, letztere für ausgeschiedenes, weniger fließfähiges Material.

Solche Trenneinrichtungen werden allgemein in der Nahrungsmittelindustrie eingesetzt und haben dort die Aufgabe, z.B. Fleisch zu zerkleinern und dabei zu entsehnen, haut- und grätenfreie Fischfarce herzustellen, Obst- und Gemüsesäfte und/oder Muse zu erzeugen, um Inhaltsstoffe aus Packungen zurückzugewinnen, und vieles mehr. Sie finden außerdem in der Recyclingindustrie mehr und mehr Anwendung.

Ihre Funktionsweise ist derart, daß das Verarbeitungsgut in die Einzugszone gebracht und dort zwischen Lochtrommel und Preßband eingezogen wird, wobei die fließfähigen Bestandteile unter dem Einfluß des Anpreßdruckes abgepreßt werden und durch die Perforation der Lochtrommel in deren Innenraum abfließen, während die weniger fließfähigen Bestandteile an der Peripherie der Lochtrommel verbleiben und schließlich im Bereich der Abgabezone vorzugsweise durch Abschaben mittels einer Abstreifvorrichtung ausgeworfen werden.

Die Führung des Preßbandes erfolgt üblicherweise durch Andruck-, Spann- und/oder Umlenkwalze. Dabei bildet die Andrückwalze in der Regel gleichzeitig die Antriebswalze für das Preßband. Das Preßband wird dabei entlang seiner Ränder zwischen einer vorderen und einer hinteren Seitenwand geführt, in denen die genannten Walzen und auch die Lochtrommel gelagert sind. Dabei durchdringt die Lochtrommel mit ihrem offenen Ende die vordere Seitenwand, in der ihre Lagerung durch Stützrollen erfolgt. Diese stützen die Lochtrommel über eine dafür vorgesehene Lagerfläche ab.

Beispielsweise zeigt die Druckschrift DE 4328627 die grundsätzliche Anordnung der Funktionsteile solcher Trenneinrichtungen mit einer speziellen Lochtrommel, während aus der EP 0394625 der prinzipielle Maschinenaufbau ersichtlich ist.

Die Anwendung solcher Trenneinrichtungen, vornehmlich im Nahrungsmittelbereich, stellt in vielerlei Hinsicht hohe Anforderungen. Hervorzuheben sind dabei u.a. die Hygieneerfordernisse. Deshalb muß eine solche Maschine leicht und gründlich zu reinigen sein, was nicht nur eine kompakte Bauweise, sondern gerade auch eine schnelle und einfache Zugänglichkeit, wie sie in praktisch allen Einsatzbereichen nötig ist, zu allen Funktionsteilen erfordert. Kritisch ist des weiteren das Preßband, genauer gesagt dessen Abrieb, da dieser unvermeidlich in das Nutzprodukt gelangt und dieses qualitativ beeinträchtigt. Außerdem treten immer dann Probleme auf, wenn großstückiges Gut zur Verarbeitung gelangt. Dieses ist nur schwierig halbwegs gleichmäßig über den Andrückbereich zu verteilen und führt leicht zu Undichtigkeiten und mangelhaften Arbeitsergebnissen.

Der Erfindung liegt die Aufgabe zugrunde, durch eine verbesserte Anordnung und Ausführung der verschiedenen Maschinenkomponenten, wie sie eingangs aufgeführt sind, zu einer durch entsprechendes Zusammenwirken wesentlich effektiver arbeitenden und handhabbaren Maschine zu gelangen.

Insbesondere bezweckt die Erfindung, eine Trenneinrichtung vorzuschlagen, die kompakt baut sowie hinsichtlich des diese verbindende Wartungsaufwandes effektiver zu betreiben ist.

Diese Aufgabe wird bei einer Maschine der eingangs genannten Aufbauform dadurch gelöst, daß das Ständerteil als im wesentlichen quaderförmiger, einteilig U-förmiger tragender senkrechtes Schacht mit lösbarer Rückwand ausgebildet ist, wobei innerhalb des Ständerteils zwischen dessen Seitenwänden eine Zwischenwand als hintere Lagerwand angeordnet ist sowie im Ständerteil einen Antriebsraum von einem Wartungsserviceraum trennt und die Rückwand letzteren abschließt.

Durch den angegebenen Aufbau des Ständerteils ergibt sich einerseits die angestrebte Kompaktanordnung der Maschine und andererseits eine klare Trennung zwischen Arbeits-, Antriebsund Serviceraum mit den Vorteilen der günstigen Wartungsmöglichkeiten eines jeden dieser Abschnitte für sich. Das Verarbeitungsprodukt bleibt letztlich von irgendwelchen Betriebsmitteln wie insbesondere Schmierfett und öl unbeeinträchtigt.

Zwar ist in DE 42 12 927A1 bereits eine Trennmaschine mit den eingangs angegebenen Merkmalen und einer vertikalen Unterteilung des Gehäuses offenbart. Allerdings ist dort das Gehäuse als reine Rahmenkonstruktion mit seitlichen Abdeckungen vorgesehen und nicht als tragender Schacht. Die Kräfte werden vielmehr über auf einem horizontalen Tisch gelagerte, Motor und Getriebe tragende Guß- und Lagerblöcke aufgenommen und abgefangen, ohne in das Gehäuse selbst eingeleitet zu werden, da dieses ohnehin nicht die notwendige Tragfähigkeit aufweist. Diese Blöcke sind relativ zueinander verschiebbar. Eine vertikale Unterteileung zwischen Antriebsraum einerseits und Wartungsserviceraum andererseits feht völlig. Vielmehr ist vor dem eigentlichen Arbeitsraum noch ein offener Aufnahmeraum für einen Druckzylinder zum Ausgleich unterschiedlicher Presskräfte vorgesehen. Dessen Kräfte werden ebenfalls an den horizontal verschieblichen Blöcken abgefangen.

In ähnlicher Weise ist eine weitere, aus US 3 734 000 bekannte Trennmaschine aufgebaut, die ebenfalls eine Gehäuserahmenkonstruktion ohne wesentliche tragende Funktion aufweist, indem letztere von Blöcken ausgeübt wird, die auf einer Basis ruhen. Eine Anregung zu Ausbildung des Gehäuses als tragender V-förmiger Schacht ist beiden Druckschriften nicht zu entnehmen. In den Unteransprücken sind bevorzugte Ausführungsformen der Erfindung wiedergegeben. So kann das Ständerteil mit seiner Vorderwand und einer zu dieser parallelen Frontplatte mit ebener Innenfläche einen Funktionsraum des Anbauteils bestimmen, in dem sich die Lochtrommel, fliegend am Ständerteil gelagert, das Preßband sowie Einzugs- und Abgabezone befinden. Hierdurch wird die Kompaktheit der Maschine gesteigert und die Tragfähigkeit des Ständerteils optimal genutzt. Dabei kann das Anbauteil sinnvoll in die Gesamt-Baukonzeption der Maschine dadurch einbezogen werden, daß es Stützmittel als Gegenlager für die im Ständerteil, wie oben angegeben, durch die Lagerung in Vorder- und Zwischenwand fliegend gelagerte Lochtrommel umfaßt. Diese Stützmittel können Rollen sein, die an entsprechenden Gegenstützen der Lochtrommel wie einem Lagerring angreifen. Damit wird der Vorteil erzielt, daß nach Abnehmen der vorderen Seitenwand und des Lagerrings beim Abziehen des Preßbandes lediglich eine Schulter zu überwinden ist, die lediglich so dimensioniert zu sein braucht, daß sie dem axial nur gering belasteten Lagerring als innerer Anschlag dienen kann. So kann auch eine Schulter vorgegeben werden, die ausschließlich im Hinblick auf die Seitenabdichtung des Preßbandes dimensioniert zu werden braucht.

Ein solcher Lagerring kann axial und drehgesichert sein, wobei er vorzugsweise zur axialen Sicherung mit in Sicherungsstellung in den Trommelmantel eingreifenden Haltemitteln versehen wird. Für eine schnelle und wirksame Montage bzw. Demontage können die Haltemittel zur axialen und Drehsicherung als radial verstellbare Klinken ausgebildet sein. Zu ähnlichen Zwecken kann der Sitz zwischen Trommelmantel und Lagerring als abgestufter Zylinder ausgebildet sein. Ebenso kann die Lochtrommel einen Boden aufweisen, der an seiner Außenfläche mit Radialnuten für die Verbindung mit einem Antrieb versehen ist.

Die angegebene, spezielle Ausbildung des Antriebes mittels eines einzigen gemeinsamen Kettenstranges führt zu maßgeblichen konstruktiven Vereinfachungen. Dabei kann zum Antrieb der Kette im Antriebsraum ein auf dem Bodenteil des Maschinengehäuses gelagertes Winkel-Motorgetriebe vorgesehen sein, wodurch eine besonders platzsparende Anordnung der Elemente ermöglicht und damit der Platzbedarf der Maschine reduziert wird.

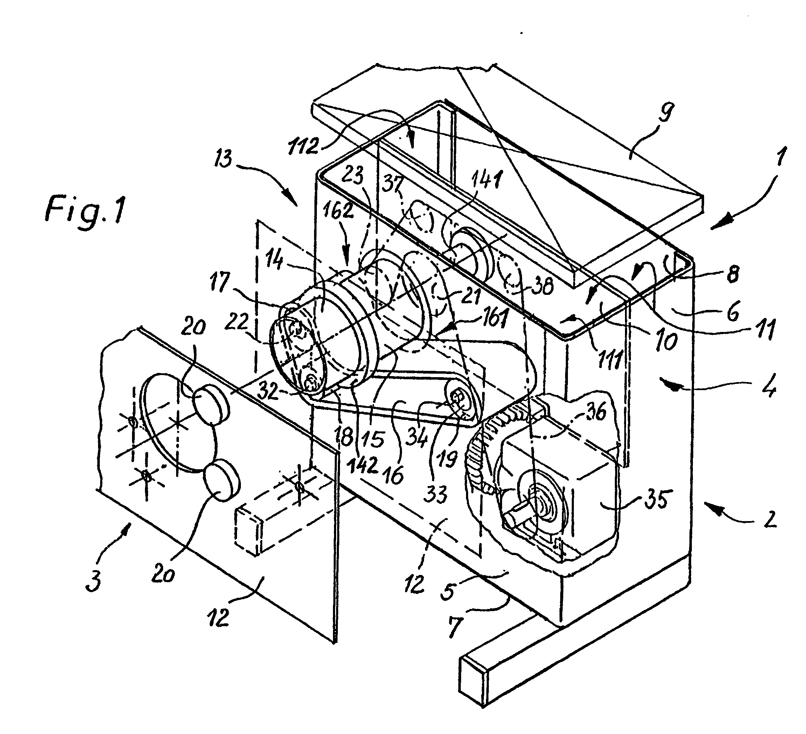

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: eine Gesamtansicht mit abgerückter Frontplatte und abgenommenem Deckel und mit den wesentlichen Ein- und Anbauteilen in perspektivischer Darstellung;
- Fig. 2: eine Teil-Draufsicht auf das Maschinengehäuse mit der Verstelleinrichtung für die Andrückwalze, teilweise im Längsschnitt dargestellt;
- Fig. 3: einen Querschnitt durch die Verstelleinrichtung längs der Schnittlinie III-III in Fig. 2;
- Fig. 4: einen Seiteneinblick in den Funktionsraum bei abgenommener Frontplatte;
- Fig. 5: eine Draufsicht der Fig. 4 ohne Preßband und Lochtrommel;
- Fig. 6: einen Teil-Längsschnitt durch die Lochtrommel und deren Lagerung;
- Fig. 7: eine Teil-Stirnansicht der Lochtrommel, von ihrem offenen Ende her betrachtet; und
- Fig. 8: eine Teil-Stirnansicht der Lochtrommel, von deren Boden her betrachtet.

Die erfindungsgemäße Trennmaschine weist ein Maschinengehäuse 1 auf, das ein Ständerteil 2 und ein Anbauteil 3 umfaßt. Der Ständerteil 2 ist durch einen Gehäusemantel 4 gebildet, der aus einem U-förmig gebogenen Blech besteht, das eine Vorderwand 5 und zwei Seitenwände 6 umfaßt, die senkrecht auf einem Bodenteil 7 stehen und einen quaderförmigen Schacht 11 bestimmen. Die Rückseite ist durch eine Rückwand 8 und die obere Öffnung durch einen Deckel 9 verschließbar. Die Seitenwände 6 sind durch eine Zwischenwand 10 miteinander verbunden, die den Schacht 11 in einen Antriebsraum 111 und einen Serviceraum 112 unterteilt und parallel zu der Vorderwand 5 verläuft.

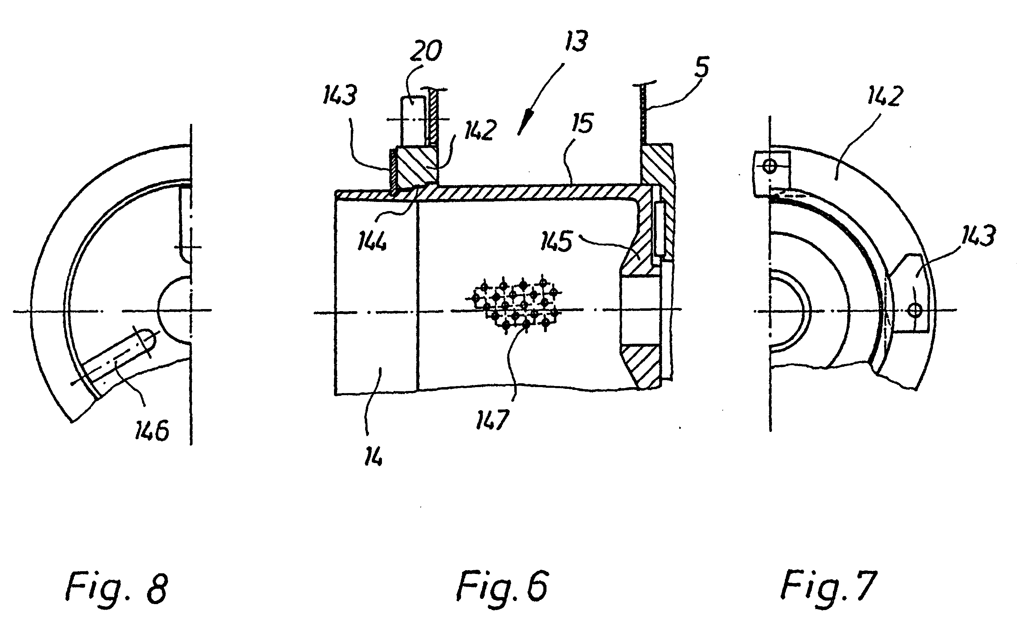

Der Anbauteil 3 besteht aus einer innenseitig ebenen Frontplatte 12 , die parallel und distanziert zu der Vorderwand 5 des Ständerteils 2 montierbar ist, so daß sich zwischen der Vorderwand 5 und der Frontplatte 12 ein Funktionsraum 13 ergibt. In diesem sind die Funktionsteile angeordnet. Sie umfassen eine einseitig offene Lochtrommel 14 mit perforiertem Trommelmantel 15 und ein endloses Preßband 16 , das die Lochtrommel 14 auf einem Teil ihres Umfanges umschlingt und eine Einzugszone 161 und eine Abgabezone 162 bildet. Dazu ist das Preßband 16 durch eine Andrückwalze 17 , eine Umlenkwalze 18 und eine Spannwalze 19 geführt. Die Lochtrommel 14 ist in der Vorderwand 5 und der Zwischenwand 10 gelagert und ragt mit ihrem offenen Ende durch die Frontplatte 12 hindurch, wo sie durch zwei Stützlager 20 abgestützt ist, die auf einem Lagerring 142 abrollen. Der Lagerring 142 ist fest oder lösbar mit dem Trommelmantel 15 verbunden. Im Falle der lösbaren Anordnung (Fig. 6) sorgen an dem Lagerring radial verstellbar befestigte Klinken 143 für dessen Sicherung auf dem Trommelmantel 15 . Um das Demontieren des Lagerringes 142 zu erleichtern, ist der Sitz 144 zwischen Trommelmantel 15 und Lagerring 142 als abgestufter Zylinder ausgeführt. Auf einer zwischen der Zwischenwand 10 und der Vorderwand 5 befindlichen Lagerwelle 141 der Lochtrommel 14 , d. h. in dem Antriebsraum 111 , ist ein Antriebszahnrad 21 zum Antrieb der Lochtrommel 14 befestigt. Die Lochtrommel ist mit ihrem Boden 145 beispielsweise durch eine nicht gezeigte zentrale Haltemutter mit der Lagerwelle 141 lösbar verbunden, wobei in dem Boden 145 befindliche Radialnuten 146 in entsprechende Mitnehmer an der Lagerwelle eingreifen.

Im Bereich oberhalb des Funktionsraumes 13 sind nicht gezeigte Mittel zur Aufnahme des Bearbeitungsgutes und/oder zum Anschluß von unterschiedlichen Beschickeinrichtungen vorgesehen.

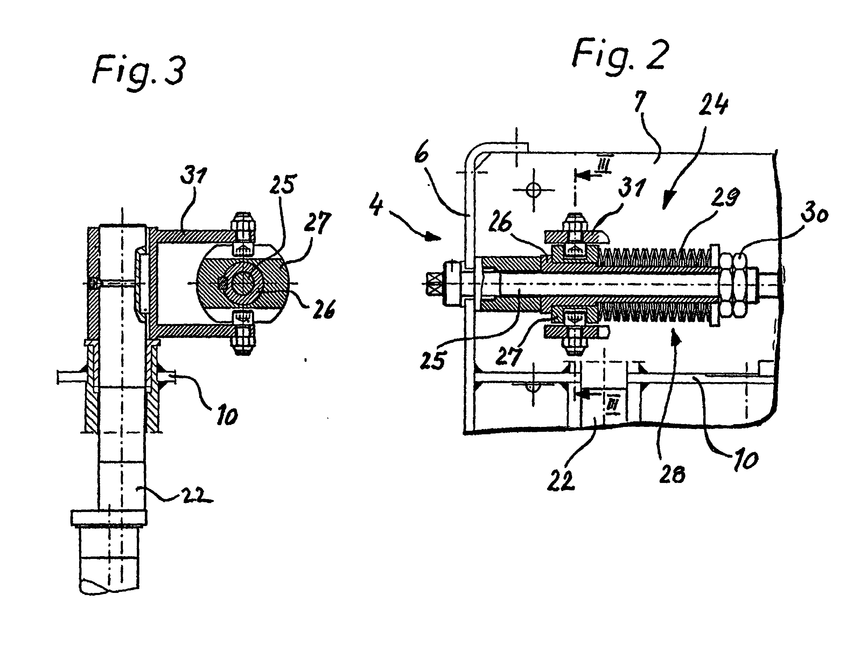

Die Andrückwalze 17 ist auf einer Exzenterwelle 22 gelagert, die ihrerseits in der Zwischenwand 10 und der Frontplatte 12 gelagert ist. Die Andrückwalze 17 ist mit einem Antriebszahnrad 23 versehen, das zwischen der Vorderwand 5 und der Zwischenwand 10 , d. h. ebenfalls in dem Antriebsraum 111 angeordnet ist. Die Andrückwalze 17 ist durch Verdrehen der Exzenterwelle 22 radial zu der Lochtrommel 14 verlagerbar, so daß das Preßband 16 mehr oder weniger an den Trommelmantel 15 andrückbar ist. Die Verdrehung der Exzenterwelle 22 erfolgt durch einen Verstellmechanismus 24 (Fig. 2 und 3) mit einer zu der Exzenterwelle 22 quer ausgerichteten und durch eine nicht gezeigte Handkurbel drehbare Stellspindel 25 mit einer Spindelmutter 26. Dabei ist die Spindelmutter 26 als Gewinde-Bundhülse ausgebildet und trägt eine Kulisse 27 , die über ein aus Tellerfedern 29 bestehendes Federelement 28 gegen den Bund der Gewinde-Bundhülse gehalten ist. Die Länge des Federelementes 28 und damit die Federkraft ist durch Kontermuttern 30 einstellbar. In die Kulisse 26 greift ein gabelförmiger Schwenkhebel 31 , der auf der Exzenterwelle 22 drehsicher befestigt ist.

Die Umlenkwalze 18 und die Spannwalze 19 sind auf Stehachsen 32 bzw. 33 gelagert, die sich in der Vorderwand 5 und der Frontplatte 12 abstützen, wobei die Stehachse 33 als Exzenterachse 34 ausgebildet ist, die durch einen nicht gezeigten Verstellmechanismus ähnlichen Aufbaus wie derjenige 24 , jedoch ohne Federelement, oder durch einen ebenfalls nicht gezeigten Handhebel verdrehbar ist.

Der Antrieb der Lochtrommel 14 und der Andrückwalze 17 erfolgt durch ein auf dem Bodenteil 7 unterhalb der Zwischenwand 10 befestigtes Winkel-Motorgetriebe 35 über einen einzigen endlosen Kettenstrang 36 , der die Antriebszahnräder 21 der Lochtrommel 14 und 23 der Andrückwalze 17 mit dem Antrieb verbindet, wobei der Kettenstrang 36 über ein Umlenkzahnrad 37 und ein Spannzahnrad 38 geführt ist.

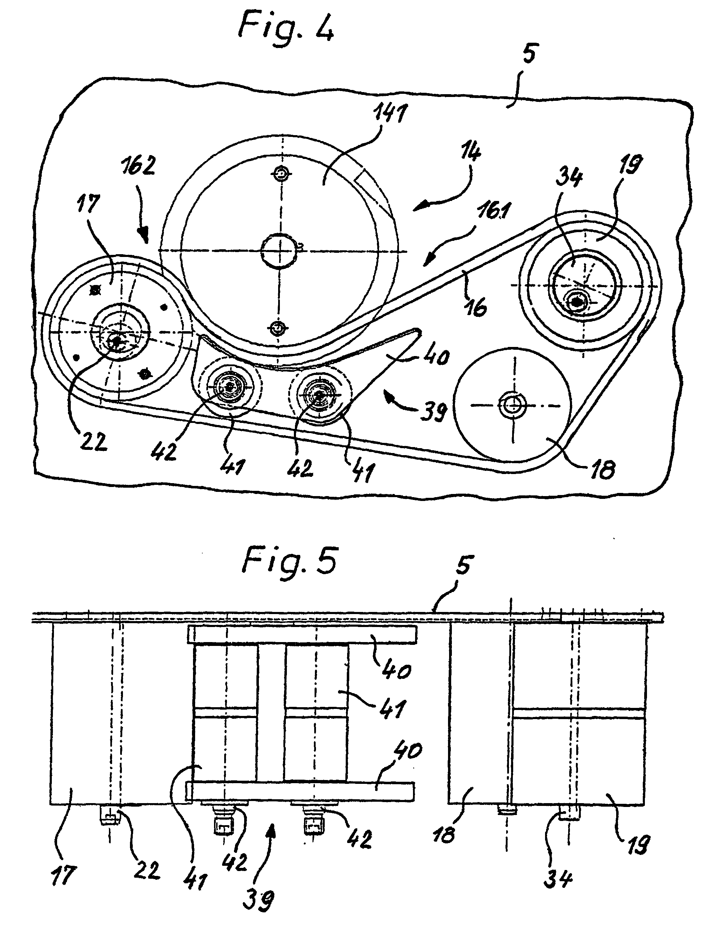

Wie aus den Figuren 4 und 5 ersichtlich, sind im Bereich der Umschlingung zwischen Lochtrommel 14 und Preßband 16 auf dessen dem zu verarbeiteten Material abgewandten Seite Leitmittel 39 angeordnet. Diese umfassen ein Paar im Randbereich 16 angeordneter Kufen 40 , zwischen denen zwei Stützwalzen 41 angeordnet sind. Die Kufen haben eine dem Preßband 16 zugewandte Stützkontur, die sich dem Preßband in dessen Laufrichtung stetig nähernd verläuft. Die Zuordnung der Stützwalzen 41 zu den Kufen 40 ist so, daß die dem Trommelmantel 15 nächstliegende Mantellinie der Stützwalzen mit der Stützkontur der Kufen fluchtet. Kufen und Stützwalzen sind auf Stehachsen 42 gelagert, die sich in der Vorderwand 5 und der Frontplatte 12 abstützen. Dabei sind die Leitmittel 39 beispielsweise durch geeignete, nicht gezeigte Exzenterhaltungen radial zu der Lochtrommel 14 verstellbar.

Um die Trennmaschine betriebsfertig zu machen, sind zunächst die z. B. zwecks Reinigung vorher demontierten Teile zu montieren. Dazu werden als erstes die Umlenkwalze 18 und die Spannwalze 19 auf die Stehachsen 32 und 33 aufgesteckt, wobei die Exzenterachse 34 der Spannwalze 19 von der vorherigen Demontage her in Entspannstellung steht, was auch für die Exzenterwelle 22 der Andrückwalze 17 gilt. Alsdann wird das Preßband 16 auf die montierten Walzen 17, 18, 19 aufgeschoben und anschließend die Frontplatte 12 aufgesetzt und über nicht gezeigte Distanzbolzen mit der Vorderwand 5 des Ständerteils 2 verbunden. Die Trennmaschine kann nun komplettiert werden durch Einsetzen der Lochtrommel 14 , die durch die Frontplatte 12 hindurch eingeschoben wird, wobei das Preßband 16 aus dem Einbauraum der Lochtrommel 14 verdrängt wird. Nach dem Einschieben wird die Lochtrommel 14 mit ihrer Lagerwellle 141 verschraubt, so daß sie drehsicher mit dieser verbunden ist. Nunmehr kann durch Verdrehen der Exzenterachse 34 der Spannwalze 19 das Preßband 16 gespannt und die Trennmaschine eingeschaltet werden. Aus Gründen der Schonung des Preßbandes 16 wird dann erst der gewünschte Andruck an der Andrückwalze 17 eingestellt, so daß jetzt das Verarbeitungsgut auf das Preßband 16 aufgegeben werden kann, von dem es in die Einzugszone 161 und damit zwischen den Trommelmantel 15 und das Preßband 16 gefördert wird.

Während die in die Lochtrommel 14 gelangte Trennkomponente des Verarbeitungsgutes über eine nicht gezeigte stationäre Austragschnecke ausgetragen wird, wird die zwischen Preßband 16 und Trommelmantel 15 verbliebene Trennkomponente aus weniger oder nicht fließfähigen Bestandteilen im Bereich der Abgabezone 162 durch eine ebenfalls nicht gezeigte Abstreifvorrichtung abgeschabt und ausgeworfen.

Wie insbesondere aus Fig. 4 erkennbar, liegt die Umschlingung des Preßbandes 16 gegenüber der Lochtrommel 14 im Winkelbereich von 100 bis 120°, während der Neigungswinkel des Preßbandes - gegen die Horizontale - im Bereich von 20 bis 30° liegt.

Die in Fig. 6 dargestellte Lochtrommel 14 zeigt eine Perforierung 147, die in Lochreihenanordnung vorgesehen ist. Diese Reihen erstrecken sich in Längsrichtung der Trommel in gerader Ausrichtung, die gegen die Achsrichtung um wenige Grad im spitzen Winkel liegt. Die Bohrungen sind in Umfangsrichtung so zueinander versetzt, daß sie einer Schraubenlinie folgen.

### Bezugszeichenliste

- 1: Maschinengehäuse
- 2: Ständerteil
- 3: Anbauteil
- 4: Gehäusemantel
- 5: Vorderwand
- 6: Seitenwand
- 7: Bodenteil
- 8: Rückwand
- 9: Deckel
- 10: Zwischenwand
- 11: Schacht
- 111: Antriebsraum
- 112: Serviceraum
- 12: Frontplatte
- 13: Funktionsraum
- 14: Lochtrommel
- 141: Lagerwelle
- 142: Lagerring
- 143: Klinke
- 144: Sitz
- 145: Boden
- 146: Radialnut
- 147: Bohrungen
- 15: Trommelmantel
- 16: Preßband
- 161: Einzugszone
- 162: Abgabezone
- 17: Andrückwalze
- 18: Umlenkwalze
- 19: Spannwalze
- 20: Stützlager
- 21: Antriebszahnrad
- 22: Exzenterwelle
- 23: Antriebszahnrad
- 24: Verstellmechanismus
- 25: Stellspindel
- 26: Spindelmutter
- 27: Kulisse
- 28: Federelement
- 29: Tellerfeder
- 30: Kontermutter
- 31: Schwenkhebel
- 32: Stehachse
- 33: Stehachse
- 34: Exzenterachse
- 35: Winkel-Motorgetriebe
- 36: Kettenstrang
- 37: Umlenkzahnrad
- 38: Spannzahnrad
- 39: Stützmittel
- 40: Kufe
- 41: Stützwalze

## Patentansprüche

1. Maschine zum Trennen von unterschiedlich fließfähigen Bestandteilen eines Stoffgemisches, umfassend
A. ein Maschinengehäuse (1), umfassend
A1 ein Ständerteil (2), das rückseitig mittels einer Rückwand (8), bodenseitig mittels eines Bodenteils (7) und nach oben mittels eines Dekkels (9) abdeckbar ist, und
A2 ein Anbauteil (3), das lösbar an dem Ständerteil unter Belassen eines einen Funktionsraum bildenden Zwischenraumes (13) befestigbar ist;
B. eine in dem Maschinengehäuse angeordnete drehbare Lochtrommel (14) mit perforiertem Trommelmantel (15);
C. ein endloses, den Trommelmantel teilweise umschlingendes und gleichsinnig mit diesem bewegtes Preßband (16);
D. verstellbare Andrückmittel (17) wie mindestens eine Walze zum Andrücken des Preßbandes gegen die Lochtrommel;
E. als Kettentrieb ausgebildete Antriebsmittel (35, 36) für Lochtrommel und/oder Preßband und
F. je eine von Preßband und Trommelmantel gebildete Einzugszone (161) und Abgabezone (162),
**dadurch gekennzeichnet, daß** das Ständerteil (2) als im wesentlichen quaderförmiger, einteilig U-förmiger tragender senkrechter Schacht (11) mit lösbarer Rückwand (8) ausgebildet ist, wobei innerhalb des Ständerteils zwischen dessen Seitenwänden (6) eine diese verbindende Zwischenwand (10) als hintere Lagerwand angeordnet ist sowie im Ständerteil einen Antriebsraum (111) von einem Wartungsserviceraum (112) trennt und die Rückwand letzteren abschließt.

2. Maschine nach Anspruch 1, **dadurch gekennzeichnet, daß** das Ständerteil (2) mit seiner Vorderwand (5) und einer zu dieser parallelen Frontplatte (12) mit ebener Innenfläche den Funktionsraum (13) des Anbauteils bestimmt, in dem sich die Lochtrommel (14), fliegend am Ständerteil (2) gelagert, das Preßband (16) sowie Einzugszone (161) und Abgabezone (162) befinden.

3. Maschine nach Anspruch 1 oder 2, **dadurch gekennzeichnet, daß** die Lagerung der Lochtrommel (14) in der Vorderwand (5) und der Zwischenwand (10) des Schachtes (11) ausgebildet ist und das fiele Ende der Lochtrommel (14) an dem Anbauteil (3) abgefangen ist.

4. Maschine nach Anspruch 2 oder 3, **dadurch gekennzeichnet, daß** das Anbauteil (3) Stützmittel (20) als Gegenlager für die im Ständerteil fliegend gelagerte Lochtrommel (14) umfaßt.

5. Maschine nach Anspruch 4, **dadurch gekennzeichnet, daß** die Stützmittel in Form von Rollen (20) vorgesehen sind, die an entsprechenden Gegenstützen der Lochtrommel wie einem Lagerring (142) angreifen.

6. Maschine nach Anspruch 5, **dadurch gekennzeichnet, daß** der Lagerring lösbar mit dem Trommelmantel (15) verbunden ist.

7. Maschine nach Anspruch 5 oder 6, **dadurch gekennzeichnet, daß** der Lagerring (142) zur axialen und Drehsicherung mit in Sicherungsstellung in den Trommelmantel eingreifenden Haltemitteln (143) in Form radial verstellbarer Klinken versehen ist.

8. Maschine nach mindestens einem der Ansprüche 5 bis 7, **dadurch gekennzeichnet, daß** der Sitz (144) zwischen Trommelmantel (15) und Lagerring (142) als abgestufter Zylinder ausgebildet ist.

9. Maschine nach einem der Ansprüche 1 bis 8, **dadurch gekennzeichnet, daß** im Antriebsraum (111) für den Antrieb von Lochtrommel (14) und Preßband (16) ein einziger gemeinsamer Kettenstrang (36) vorgesehen ist.

10. Maschine nach Anspruch 9, **dadurch gekennzeichnet, daß** zum Antrieb der Kette (36) in dem Antriebsraum (111) ein auf dem Bodenteil (7) des Maschinengehäuses (1) gelagertes Winkel-Motorgetriebe (35) vorgesehen ist.

## Claims

1. Machine for separating a material mixture into components of different flowability, comprising
A. a machine housing (1), comprising
A1 a stand component (2), which can be covered by a rear wall (8) at its rear side, by a floor part (7) at its bottom side and by a cover (9) towards the top, and
A2 an add-on component (3) releasably attached to the stand component while leaving a gap (13) forming a functional section;
B. a rotatable perforated drum (14) with a perforated drum shell (15) and arranged in the housing;
C. an endless presser belt (16) arranged to partially wrap said drum shell and to move in the same sense as the latter;
D. adjustable pressing means (17) such as at least one roller for pressing the presser belt against the perforated drum;
E. drive means (35, 36) for the perforated drum and/or the presser belt in the form of a chain drive; and
F. a pull-in zone (161) and a delivery zone (162) formed by the presser belt and the drum shell,
**characterized in that** the stand component (2) is formed as an essentially parallelepipid-shaped, one-piece U-shaped carrying vertical shaft (11) with the rear wall (8) arranged to be detachable therefrom, a partition wall (10) being arranged within the stand component between the side walls (6) thereof and connecting the latter as a rear mounting wall as well as dividing, within the stand component, a drive section (111) from a maintenance service section (112), and the rear wall closing the latter.

2. Machine as claimed in claim 1, **characterized in that** the stand component (2) with its front wall (5) and a front plate (12) with a plain inner face and arranged parallel to the front wall defines the functional section (13) of the add-on component, in which section are located the perforated drum (14) cantilever-mounted on the stand component (2), the presser belt (16), as well as the pull-in zone (161) and the delivery zone (162).

3. Machine as claimed in claim 1 or 2, **characterized in that** the mounting of the perforated drum (14) is arranged in the front wall (5) and the partition wall (10) of the shaft (11) and the free end of the perforated drum (14) is supported in the add-on portion (3).

4. Machine as claimed in claim 2 or 3, **characterized in that** the add-on portion (3) comprises support means (20) serving as complementary bearings for the perforated drum (14) mounted as a cantilever in the stand component.

5. Machine as claimed in claim 4, **characterized in that** the support means are provided in the form of rollers (20) which engage corresponding complementary bearing means of the perforated drum such as a bearing ring (142).

6. Machine as claimed in claim 5, **characterized in that** the bearing ring is detachably connected to the drum shell (15).

7. Machine as claimed in claim 5 or 6, **characterized in that** the bearing ring (142) comprises retention means (143) in the form of radially displaceable catches, which, in a securing position, engage the drum shell to prevent axial and rotational movement of the bearing ring.

8. Machine as claimed at least in one of claims 5 to 7, **characterized in that** the seat (144) between the drum shell (15) and the bearing ring (142) is formed in the shape of a stepped cylinder.

9. Machine as claimed in any one of claims 1 to 8, **characterized in that** a single common driving chain (36) for driving the perforated drum (14) and the presser belt (16) is provided in the drive section (111).

10. Machine as claimed in claim 9, **characterized in that** an angular gear motor (35) is arranged in the driving section (111) mounted on the floor part (7) of the machine housing (1) for driving the chain (36).

## Revendications

1. Machine pour séparer des composants de fluidités différentes d'un mélange de matières, comprenant :
A. un carter de machine (1), comportant
A1 une partie de support (2) qui peut être recouverte au dos d'une paroi arrière (8), au fond d'une partie de fond (7) et vers le haut d'un couvercle (9), et
A2 une partie rapportée (3) qui peut être fixée de façon amovible à la partie de support en ménageant un espace intermédiaire (13) formant un espace fonctionnel ;
B. un tambour perforé (14) agencé de façon à pouvoir tourner dans le carter de machine rotatif et doté d'une enveloppe de tambour perforée (15);
C. une bande de pressage (16) sans fin enroulée partiellement sur l'enveloppe de tambour et agitée avec celle-ci dans le même sens ;
D. des moyens presseur déplaçables (17) se présentant sous la forme d'au moins un rouleau pour presser la bande de pressage contre le tambour perforé ;
E. des moyens d'entraînement (35, 36) conformés en transmission par chaîne pour le tambour perforé et/ou la bande de pressage et
F. une zone d'introduction (161), formée par la bande de pressage et l'enveloppe de tambour, et une zone de sortie (162).
**caractérisée en ce que** la partie de support (2) est conformée en puits (11) perpendiculaire de forme sensiblement carrée, comportant en une seule pièce un pied en forme de U, lequel puits comporte une paroi arrière amovible (8); une paroi intermédiaire (10) étant agencée en tant que paroi de support arrière à l'intérieur de la partie de support, entre les parois latérales (6) de celle-ci, et reliant lesdites parois latérales, et séparant dans la partie de support un espace d'entraînement (111) d'un espace de maintenance (112), et la paroi arrière isolant ce dernier.

2. Machine selon la revendication 1, **caractérisée en ce que** la partie de support (2) définit, à l'aide de sa paroi avant (5) et d'une plaque frontale (12) parallèle à ladite paroi avant à surface intérieure plane, l'espace fonctionnel (13) de la partie rapportée dans lequel se trouvent le tambour perforé (14), monté mobile sur la partie de support (2), la bande de pressage (16) ainsi que la zone d'introduction (161) et la zone de sortie (162).

3. Machine selon la revendication 1 ou 2, **caractérisée en ce que** le montage des paliers du tambour perforé (14) est effectué dans la paroi avant (5) et la paroi intermédiaire (10) du puits (11) et l'extrémité libre du tambour perforé est reçue à la partie rapportée (3).

4. Machine selon la revendication 2 ou 3, **caractérisée en ce que** la partie rapportée (3) comporte des moyens d'appui (20) se présentant sous la forme de palier-support pour le tambour perforé (14) monté mobile dans la partie de support.

5. Machine selon la revendication 4, **caractérisée en ce que** les moyens d'appui sont prévus sous la forme de rouleaux (20) qui s'engagent avec des supports homologues correspondants du tambour perforé comme un palier annulaire (142).

6. Machine selon la revendication 5, **caractérisée en ce que** le palier annulaire est relié de façon amovible à l'enveloppe de tambour (15).

7. Machine selon la revendication 5 ou 6, **caractérisée en ce que** le palier annulaire (142) est doté, au but de la sécurité axiale et en rotation de moyens de retenue (143) se présentant sous la forme de cliquets réglables radialement et s'engageant en position de sécurité dans l'enveloppe de tambour.

8. Machine selon au moins l'une des revendications 5 à 7, **caractérisée en ce que** le siège (144) entre l'enveloppe de tambour (15) et le palier annulaire (142) est conformé en cylindre étagé.

9. Machine selon l'une des revendications 1 à 8, **caractérisée en ce qu'**il est prévu une branche de chaîne (36) unique commune dans l'espace d'entraînement (111) pour l'entraînement du tambour perforé (14) et de la bande de pressage (16).

10. Machine selon la revendication 9, **caractérisée en ce qu'**il est prévu, dans l'espace d'entraînement (111), un engrenage menant conique (35) monté sur la partie de fond (7) du carter de machine (1) en vue d'entraîner la chaîne (36).
